# EUROPEAN PATENT SPECIFICATION

(11) **EP 2 228 523 B1**
(45) Date of publication and mention of the grant of the patent: **21.05.2014**
(21) Application number: 08791887.6
(22) Date of filing: 30.07.2008
(51) Int. Cl.: F02B 37/007, F02B 37/02, F02B 37/16, F02B 37/22, F02B 37/00

(54) **METHOD FOR OPERATING A MARINE DIESEL ENGINE**
VERFAHREN ZUM BETREIBEN EINES SCHIFFSDIESELMOTORS
PROCÉDÉ POUR GÉRER UN MOTEUR MARIN DIESEL

(30) Priority: 10.01.2008 JP 2008003361
(43) Date of publication of application: 15.09.2010
(73) Proprietor: Mitsubishi Heavy Industries, Ltd., Tokyo 108-8215 (JP); Tsuneishi Holdings Corporation, Numakuma-cho Fukuyama-shi Hiroshima 720-0393 (JP); Hitachi Zosen Corporation, Osaka-shi, Osaka 559-8559 (JP)
(72) Inventor: SHIRAISHI, Keiichi, Nagasaki-shi Nagasaki 850-8610 (JP); TESHIMA, Takanori, Nagasaki-shi Nagasaki 850-8610 (JP); ASHIDA, Takuma, Fukuyama-shi Hiroshima 720-0393 (JP); NISHIJIMA, Takanori, Fukuyama-shi Hiroshima 720-0393 (JP); NOMURA, Shinji, Kumamoto 869-0193 (JP)
(74) Representative: Henkel, Breuer & Partner
(86) International application number: PCT/JP2008/063656
(87) International publication number: WO 2009/087788

(56) References cited:
- EP-B1- 1 008 735
- JP-A- 1 315 614
- JP-A- 2 181 023
- JP-A- 2 298 628
- JP-A- 3 199 626
- JP-A- 3 199 626
- JP-A- 60 166 716

## Description

### Technical Field

The present invention relates to a method for operating marine diesel engines, and particularly of a marine diesel engine equipped with a plurality of turbochargers for pressurizing supplied air by means of exhaust gas.

### Background Art

Merchant ships sometimes sail in a sailing mode at a speed lower than a normal service speed to reduce the fuel consumption of the main engine or to adjust the sailing schedule. In such cases, the ship needs to sail with a main engine load lower than a normal sailing load, although it is difficult to achieve the optimum turbocharger efficiency over a wide range of main engine loads if a single normal turbocharger is installed. Accordingly, if a plurality of turbochargers are installed and the number of those in operation is controlled, the optimum turbocharger efficiency can be achieved over a wide range of main engine loads so that the fuel consumption can be reduced as compared with the case of a single normal turbocharger, thus contributing to an improvement in the sailing profitability of merchant ships and a reduction in the environmental load. A known example of such a marine diesel engine equipped with a plurality of turbochargers is the one disclosed in JP 60-166716 A.

### Disclosure of Invention

The marine diesel engine disclosed in JP 60-166716 A above, however, has a problem in that, when a valve b is opened upon starting of a No. 2 turbocharger 2, backflow occurs from a blower 1B of a No. 1 turbocharger 1 (specifically, a scavenging chamber 3) to a blower 2B of the No. 2 turbocharger 2, thus impairing smooth rotation (starting) of the No. 2 turbocharger 2 and causing surging in the No. 2 turbocharger 2.

JP 2181023 A discloses a marine diesel engine that has a cutoff valve blocking a supply pipe from a compressor part of an auxiliary turbocharger to a chamber communicating with a supply pipe from a compressor part of a main turbocharger. This valve mechanism seems to be rigidly mechanically linked to a relief valve opening to the atmosphere and constantly biased in the closing direction by means of a spring.

An object of the present invention, which has been made in light of the above circumstances, is to provide a method for operating a marine diesel engine, equipped with a plurality of turbochargers, that can prevent backflow from a compressor part of a turbocharger that operates constantly to a compressor part of a turbocharger to be started or stopped when the turbochargers are switched from single operation to parallel operation or from parallel operation to single operation, to smoothly start or stop the turbocharger to be started or stopped, thus preventing surging in the turbocharger to be started or stopped.

To solve the above problem, the present invention provides a method for operating a marine diesel engine according to claim 1. The marine diesel engine to which the method according to the present invention is applied is equipped with an engine body; at least one main exhaust gas turbine turbocharger that includes a turbine part driven by means of exhaust gas guided from the engine body and a compressor part driven by the turbine part to pump outside air into the engine body and that operates constantly during operation of the engine body; and at least one auxiliary exhaust gas turbine turbocharger that includes a turbine part driven by means of exhaust gas guided from the engine body and a compressor part driven by the turbine part to pump outside air into the engine body and that is at a standstill or operates in parallel with the main exhaust gas turbine turbocharger during operation of the engine body. The marine diesel engine includes an exhaust pipe via which an exhaust manifold mounted on the engine body communicates with the turbine part of the auxiliary exhaust gas turbine turbocharger; a turbine inlet valve connected somewhere in the exhaust pipe; a supply pipe via which the compressor part of the auxiliary exhaust gas turbine turbocharger communicates with a supply manifold mounted on the engine body; a check valve that is connected somewhere in the supply pipe and that becomes open when the outlet pressure of the compressor part of the auxiliary exhaust gas turbine turbocharger reaches or exceeds the pressure of the supply manifold; an air vent pipe having one end thereof connected somewhere in the supply pipe between the compressor part of the auxiliary exhaust gas turbine turbocharger and the check valve; and an air vent valve connected somewhere in the air vent pipe.

The method includes opening the air vent valve in advance, then opening the turbine inlet valve, and gradually closing the air vent valve when starting the auxiliary exhaust gas turbine turbocharger; and gradually opening the air vent valve and then gradually closing the turbine inlet valve when stopping the auxiliary exhaust gas turbine turbocharger.

In the method for operating the marine diesel engine according to the present invention, the check valve disposed in the supply pipe becomes open (fully open) when, for example, the auxiliary exhaust gas turbine turbocharger is started and the outlet pressure of the compressor part of the auxiliary exhaust gas turbine turbocharger reaches or exceeds the pressure of the supply manifold.

This prevents backflow from the supply manifold to the compressor part of the auxiliary exhaust gas turbine turbocharger upon starting of the auxiliary exhaust gas turbine turbocharger to allow the auxiliary exhaust gas turbine turbocharger to be smoothly rotated (started), thus preventing surging in the auxiliary exhaust gas turbine turbocharger.

On the other hand, in the method for operating the marine diesel engine according to the present invention, the check valve disposed in the supply pipe becomes closed (fully closed) when, for example, the air vent valve is opened and the outlet pressure of the compressor part of the auxiliary exhaust gas turbine turbocharger falls below the pressure of the supply manifold.

This prevents backflow from the supply manifold to the compressor part of the auxiliary exhaust gas turbine turbocharger upon stopping of the auxiliary exhaust gas turbine turbocharger to allow the auxiliary exhaust gas turbine turbocharger to be smoothly rotated (stopped), thus preventing surging in the auxiliary exhaust gas turbine turbocharger.

The method of operating a marine diesel engine according to the present invention provides the advantage of preventing backflow from the compressor part of the turbocharger that operates constantly to the compressor part of the turbocharger to be started or stopped when the turbochargers are switched from single operation to parallel operation or from parallel operation to single operation, to smoothly start or stop the turbocharger to be started or stopped, thus preventing surging in the turbocharger to be started or stopped.

### Brief Description of Drawings

[FIG. 1] Fig. 1 is a schematic configuration diagram of a marine diesel engine to which the method according to an embodiment of the present invention is applicable.
[FIG. 2] Fig. 2 is a graph for illustrating the operation and advantages of the marine diesel engine to which the method according to the present invention is applicable.
[FIG. 3] Fig. 3 is a graph for illustrating the operation and advantages of the marine diesel engine to which the method according to the present invention is applicable.

### Best Mode for Carrying Out the Invention

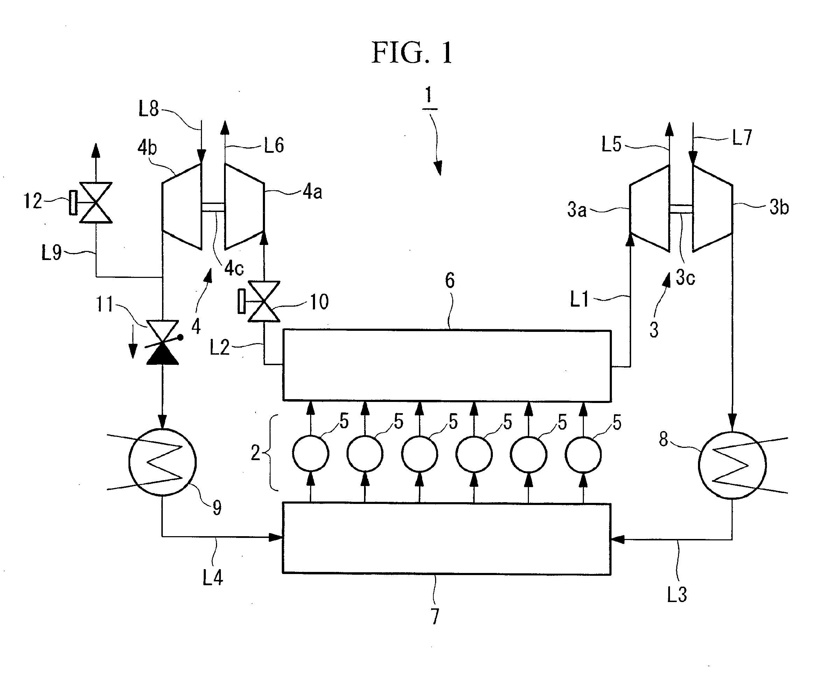

An embodiment of a method for operating a marine diesel engine according to the present invention will be described below with reference to Figs. 1 to 3.

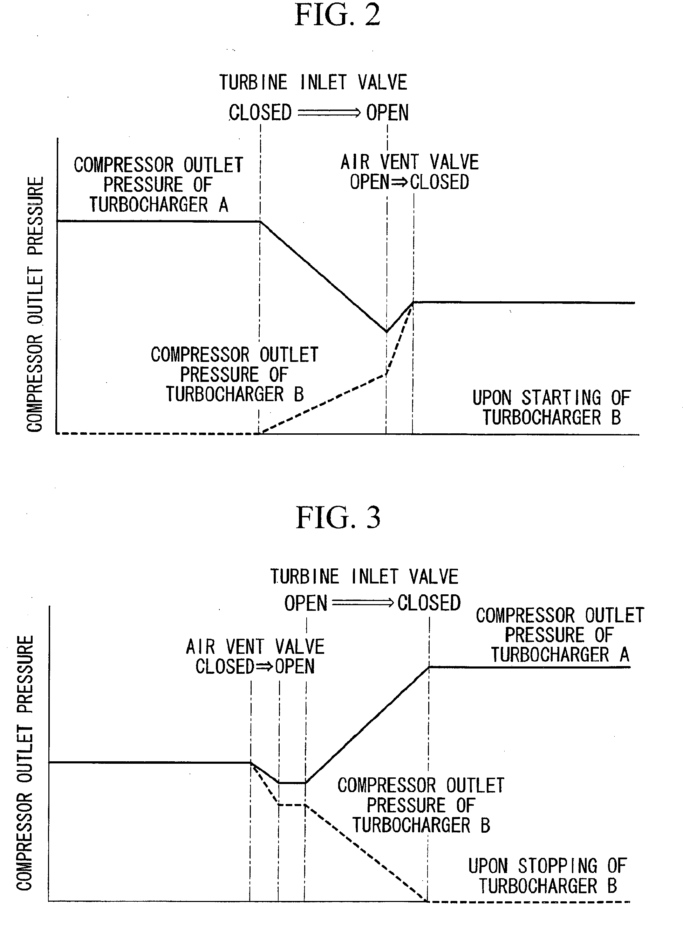

Fig. 1 is a schematic configuration diagram of the marine diesel engine to which the method according to this embodiment is applicable, and Figs. 2 and 3 are graphs for illustrating the operation and advantages of the method for operating the marine diesel engine according to the present invention.

As shown in Fig. 1, a marine diesel engine 1 is equipped with a diesel engine body (for example, a low-speed two-cycle diesel engine) 2, a first exhaust gas turbine turbocharger (main exhaust gas turbine turbocharger) 3, and a second exhaust gas turbine turbocharger (auxiliary exhaust gas turbine turbocharger) 4.

A screw propeller (not shown) is directly or indirectly attached to a crankshaft (not shown) constituting the diesel engine body (hereinafter referred to as "engine body") 2 with a propeller shaft (not shown) therebetween. In addition, the engine body 2 has cylinder parts 5 composed of cylinder liners (not shown), cylinder covers (not shown), etc., and pistons (not shown) coupled to the crankshaft are disposed in the respective cylinder parts 5. In addition, exhaust ports (not shown) of the respective cylinder parts 5 are connected to an exhaust manifold 6, and the exhaust manifold 6 is in turn connected to the inlet side of a turbine part 3a of the first exhaust gas turbine turbocharger (hereinafter referred to as "turbocharger A") 3 via a first exhaust pipe L1 and to the inlet side of a turbine part 4a of the second exhaust gas turbine turbocharger (hereinafter referred to as "turbocharger B") 4 via a second exhaust pipe L2. On the other hand, supply ports (not shown) of the respective cylinder parts 5 are connected to a supply manifold 7, and the supply manifold 7 is in turn connected to a compressor part 3b of the turbocharger A 3 via a first supply pipe L3 and to a compressor part 4b of the turbocharger B 4 via a second supply pipe L4.

The turbocharger A 3 is constituted mainly by the turbine part 3a, which is driven by means of exhaust gas (combustion gas) guided from the engine body 2 through the first exhaust pipe L1; the compressor part 3b, which is driven by the turbine part 3a to pump outside air into the engine body 2; and a casing (not shown) disposed between the turbine part 3a and the compressor part 3b so as to support them.

In addition, a rotating shaft 3c is inserted into the casing with one end protruding to the turbine part 3a side and the other end protruding to the compressor part 3b side. One end of the rotating shaft 3c is attached to a turbine disk (not shown) of a turbine rotor (not shown) constituting the turbine part 3a, whereas the other end of the rotating shaft 3c is attached to a hub (not shown) of a compressor impeller (not shown) constituting the compressor part 3b.

The turbocharger B 4 is constituted mainly by the turbine part 4a, which is driven by means of exhaust gas (combustion gas) guided from the engine body 2 through the second exhaust pipe L2; the compressor part 4b, which is driven by the turbine part 4a to pump outside air into the engine body 2; and a casing (not shown) disposed between the turbine part 4a and the compressor part 4b so as to support them.

In addition, a rotating shaft 4c is inserted into the casing with one end protruding to the turbine part 4a side and the other end protruding to the compressor part 4b side. One end of the rotating shaft 4c is attached to a turbine disk (not shown) of a turbine rotor (not shown) constituting the turbine part 4a, whereas the other end of the rotating shaft 4c is attached to a hub (not shown) of a compressor impeller (not shown) constituting the compressor part 4b.

The exhaust gas passing through the turbine parts 3a and 4a is guided through exhaust pipes L5 and L6 connected to the outlet sides of the turbine parts 3a and 4a, respectively, to a funnel (not shown) and is then discharged outside the ship.

Mufflers (not shown) are disposed in supply pipes L7 and L8 connected to the inlet sides of the compressor parts 3b and 4b, respectively, so that the outside air passing through the mufflers is guided into the compressor parts 3b and 4b. In addition, air coolers (intercoolers) 8 and 9, surge tanks (not shown), etc. are connected somewhere in the supply pipes L3 and L4 connected to the outlet sides of the compressor parts 3b and 4b so that the outside air passing through the compressor parts 3b and 4b is supplied to the supply manifold 7 of the engine body 2 through the air coolers 8 and 9, the surge tanks, etc.

In the marine diesel engine 1, a turbine inlet valve 10 is connected somewhere in the second exhaust pipe L2, a check valve 11 is connected somewhere in the second supply pipe L4 (specifically, the portion of the second supply pipe L4 between the compressor part 4b and the air cooler 9), and an end of an air vent pipe L9 is connected somewhere in the portion of the second supply pipe L4 upstream of the check valve 11 (specifically, the portion of the second supply pipe L4 between the compressor part 4b and the check valve 11). The other end of the air vent pipe L9 is connected somewhere in the exhaust pipe L6 or the funnel so that the outside air passing through the air vent pipe L9 is discharged outside the ship together with the exhaust gas. In addition, an air vent valve 12 is connected somewhere in the air vent pipe L9.

The turbine inlet valve 10 and the air vent valve 12 are manually or automatically opened or closed when the single operation mode of the turbocharger A 3 is switched to the parallel operation mode of the turbocharger A 3 and the turbocharger B 4 by starting the turbocharger B 4, or when the parallel operation mode of the turbocharger A 3 and the turbocharger B 4 is switched to the single operation mode of the turbocharger A 3 by stopping the turbocharger B 4.

Specifically, as shown in Fig. 2, when the single operation mode of the turbocharger A 3 is switched to the parallel operation mode of the turbocharger A 3 and the turbocharger B 4 by starting the turbocharger B 4, the turbine inlet valve 10 is opened (fully opened), and the air vent valve 12, which had been previously opened, is gradually closed. As the air vent valve 12 is gradually closed, the compressor outlet pressures of the turbocharger A 3 and the turbocharger B 4 rise gradually, and the compressor outlet pressures of the turbocharger A 3 and the turbocharger B 4 eventually reach a predetermined pressure.

The check valve 11 becomes open (fully open) when the compressor outlet pressure of the turbocharger B 4 reaches or exceeds the pressure of the supply manifold 7 or substantially equals the pressure of the supply manifold 7.

On the other hand, as shown in Fig. 3, when the parallel operation mode of the turbocharger A 3 and the turbocharger B 4 is switched to the single operation mode of the turbocharger A 3 by stopping the turbocharger B 4, the air vent valve 12 is gradually opened (fully opened) until the pressure of the supply manifold 7 exceeds the compressor outlet pressure of the turbocharger B 4 (the outlet pressure of the compressor part 4b), and then the turbine inlet valve 10 is closed. As the turbine inlet valve 10 is closed, the compressor outlet pressure of the turbocharger B 4 decreases gradually to 0 (zero), and the turbocharger B 4 stops.

The check valve 11 becomes closed (fully closed) when the compressor outlet pressure of the turbocharger B 4 falls below the pressure of the supply manifold 7 or becomes a predetermined pressure lower than the pressure of the supply manifold 7.

In the marine diesel engine 1, the check valve 11 disposed in the second supply pipe L4 becomes open (fully open) when the turbocharger B 4 is started and the compressor outlet pressure of the turbocharger B 4 (the outlet pressure of the compressor part 4b) reaches or exceeds the pressure of the supply manifold 7 or substantially equals the pressure of the supply manifold 7. That is, upon starting of the turbocharger B 4, the check valve 11 disposed in the second supply pipe L4 becomes open when the pressure difference between the compressor outlet pressure of the turbocharger B 4 and the pressure of the supply manifold 7 disappears or becomes negligible.

This prevents, or significantly reduces, backflow from the supply manifold 7 to the compressor part 4b upon starting of the turbocharger B 4 to allow the turbocharger B 4 (rotating shaft 4c) to be smoothly rotated (started), thus preventing surging in the turbocharger B 4.

In the method for operating the marine diesel engine 1 according to this embodiment, on the other hand, the check valve 11 disposed in the second supply pipe L4 becomes closed (fully closed) when the air vent valve 12 is opened and the compressor outlet pressure of the turbocharger B 4 (the outlet pressure of the compressor part 4b) falls below the pressure of the supply manifold 7 or becomes a predetermined pressure lower than the pressure of the supply manifold 7. That is, upon stopping of the turbocharger B 4, the check valve 11 disposed in the second supply pipe L4 becomes closed when the pressure difference between the compressor outlet pressure of the turbocharger B 4 and the pressure of the supply manifold 7 exceeds a predetermined pressure.

This prevents, or significantly reduces, backflow from the supply manifold 7 to the compressor part 4b upon stopping of the turbocharger B 4 to allow the turbocharger B 4 (rotating shaft 4c) to be smoothly rotated (stopped), thus preventing surging in the turbocharger B 4.

Whereas the marine diesel engine equipped with one turbocharger A 3 and one turbocharger B 4 has been described above, the present invention is not limited thereto, but can also be applied to a marine diesel engine equipped with two or more turbochargers A 3 and/or two or more turbochargers B 4.

## Claims

1. A method for operating a marine diesel engine (1) equipped with:
an engine body (2);
at least one main exhaust gas turbine turbocharger (3) that includes a turbine part (3a) provided so as to be driven by means of exhaust gas guided from the engine body (2), and a compressor part (3b) driven by the turbine part (3a) to pump outside air into the engine body (2), and that is provided so as to operate constantly during operation of the engine body (2); and
at least one auxiliary exhaust gas turbine turbocharger (4) that includes a turbine part (4a) provided so as to be driven by means of exhaust gas guided from the engine body (2), and a compressor part (4b) driven by the turbine part (4a) to pump outside air into the engine body (2), and that is provided so as to be at a standstill or operate in parallel with the main exhaust gas turbine turbocharger (3) during operation of the engine body (2);
the marine diesel engine (1) comprising:
an exhaust pipe (L2) via which an exhaust manifold (6) mounted on the engine body (2) communicates with the turbine part (4a) of the auxiliary exhaust gas turbine turbocharger (4);
a turbine inlet valve (10) connected in the exhaust pipe (L2);
a supply pipe (L4) via which the compressor part (4b) of the auxiliary exhaust gas turbine turbocharger (4) communicates with a supply manifold (7) mounted on the engine body (2);
a check valve (11) that is connected in the supply pipe (L4) and that becomes open when the outlet pressure of the compressor part (4b) of the auxiliary exhaust gas turbine turbocharger (4) reaches or exceeds the pressure of the supply manifold (7);
an air vent pipe (L9) having one end thereof connected in the supply pipe (L4) between the compressor part (4b) of the auxiliary exhaust gas turbine turbocharger (4) and the check valve (11); and
an air vent valve (12) connected in the air vent pipe (L9);
the method comprising:
opening the air vent valve (12) in advance, then opening the turbine inlet valve (10), and gradually closing the air vent valve (12) when starting the auxiliary exhaust gas turbine turbocharger (4), wherein the check valve (11) becomes fully open when the outlet pressure of the compressor part (4b) of the auxiliary exhaust gas turbine turbocharger (4) reaches or exceeds the pressure of the supply manifold (7); and
gradually opening the air vent valve (12) until the pressure of the supply manifold (7) exceeds the outlet pressure of the compressor part (4b) of the auxiliary exhaust gas turbine turbocharger (4), and then closing the turbine inlet valve (10) when stopping the auxiliary exhaust gas turbine turbocharger (4), wherein the check valve (11) becomes fully closed when the outlet pressure of the compressor part (4b) of the auxiliary exhaust gas turbine turbocharger (4) becomes a pressure that is lower than the pressure of the supply manifold (7).

## Patentansprüche

1. Ein Verfahren zum Betreiben eines Marine-Dieselmotors (1), der ausgerüstet ist mit:
einem Motorkörper (2),
mindestens einem Haupt-Abgasturbinen-Turbolader (3), der ein Turbinenteil (3a), das so vorgesehen ist, dass es mittels von dem Motorkörper (2) zugeleitetem Abgas anzutreiben ist, und ein Kompressorteil (3b), der durch das Turbinenteil (3a) angetrieben ist, um Außenluft in den Motorkörper (2) zu pumpen, aufweist, und der so vorgesehen ist, dass er während des Betriebs des Motorkörpers (2) konstant arbeitet, und
mindestens einem Hilfs-Abgasturbinen-Turbolader (4), der ein Turbinenteil (4a), das so vorgesehen ist, dass es mittels von dem Motorkörper (2) zugeleitetem Abgas anzutreiben ist, und ein Kompressorteil (4b), der durch das Turbinenteil (4a) angetrieben ist, um Außenluft in den Motorkörper (2) zu pumpen, aufweist, und der so vorgesehen ist, dass er während des Betriebs des Motorkörpers (2) stillsteht oder parallel zu dem Haupt-Abgasturbinen-Turbolader (3) arbeitet,
wobei der Marine-Dieselmotor (1) aufweist:
ein Abgasrohr (L2), über welches ein Auslassverteiler (6), der an dem Motorkörper (2) angebracht ist, mit dem Turbinenteil (4a) des Hilfs-Abgasturbinen-Turboladers (4) in Verbindung ist,
ein Turbinen-Einlassventil (10), das mit dem Abgasrohr (L2) verbunden ist,
ein Zuführrohr (L4), über welches das Kompressorteil (4b) des Hilfs-Abgasturbinen-Turboladers (4) mit einem Zuführverteiler (7), welcher an dem Motorkörper (2) angebracht ist, in Verbindung ist,
ein Rückschlagventil (11), das in das Zuführrohr (L4) eingeschaltet ist und das geöffnet wird, wenn der Auslassdruck des Kompressorteils (4b) des Hilfs-Abgasturbinen-Turboladers (4) den Druck des Zuführverteilers (7) erreicht oder übersteigt,
ein Luft-Belüftungsrohr (L9), von dem ein Ende in das Zuführrohr (L4) zwischen dem Kompressorteil (4b) des Hilfs-Abgasturbinen-Turboladers (4) und dem Rückschlagventil (11) eingeschaltet ist, und
ein Luft-Belüftungsventil (12), das in das Luft-Belüftungsrohr (L9) eingeschaltet ist,
wobei das Verfahren aufweist:
Öffnen des Luft-Belüftungsventils (12) vorab, dann Öffnen des Turbinen-Einlassventils (10), und allmähliches Schließen des Luft-Belüftungsventils (12), wenn der Hilfs-Abgasturbinen-Turbolader (4) gestartet wird, wobei das Rückschlagventil (11) vollständig geöffnet wird, wenn der Auslassdruck des Kompressorteils (4b) des Hilfs-Abgasturbinen-Turboladers (4) den Druck des Zuführverteilers (7) erreicht oder übersteigt, und
allmähliches Öffnen des Luft-Belüftungsventils (12), bis der Druck des Zuführverteilers (7) den Auslassdruck des Kompressorteils (4b) des Hilfs-Abgasturbinen-Turboladers (4) übersteigt, und dann Schließen des Turbinen-Einlassventils (10), wenn der Hilfs-Abgasturbinen-Turbolader (4) gestoppt wird, wobei das Rückschlagventil (11) vollständig geschlossen wird, wenn der Auslassdruck des Kompressorteils (4b) des Hilfs-Abgasturbinen-Turboladers (4) einen Druck annimmt, der geringer ist als der Druck des Zuführverteilers (7).

## Revendications

1. Procédé pour faire fonctionner un moteur marin diesel (1) équipé de:
un corps de moteur (2);
au moins un turbocompresseur de turbine à gaz d'échappement principal (3) qui comprend une partie de turbine (3a) prévue afin d'être entraînée au moyen du gaz d'échappement guidé à partir du corps de moteur (2), et une partie de compresseur (3b) entraînée par la partie de turbine (3a) pour pomper l'air extérieur dans le corps de moteur (2) et qui est prévu afin de fonctionner de manière constante pendant le fonctionnement du corps de moteur (2); et
au moins un turbocompresseur de turbine à gaz d'échappement auxiliaire (4) qui comprend une partie de turbine (4a) prévue afin d'être entraînée au moyen du gaz d'échappement guidé à partir du corps de moteur (2), et une partie de compresseur (4b) entraînée par la partie de turbine (4a) pour pomper l'air extérieur dans le corps de moteur (2), et qui est prévu afin d'être à l'arrêt ou fonctionner parallèlement au turbocompresseur de turbine à gaz d'échappement principal (3) pendant le fonctionnement du corps de moteur (2);
le moteur marin diesel (1) comprenant:
un tuyau d'échappement (L2) grâce auquel un collecteur d'échappement (6) monté sur le corps de moteur (2) communique avec la partie de turbine (4a) du turbocompresseur de turbine à gaz d'échappement auxiliaire (4);
une soupape d'entrée de turbine (10) raccordée au tuyau d'échappement (L2);
un tuyau d'alimentation (L4) grâce auquel la partie de compresseur (4b) du turbocompresseur de turbine à gaz d'échappement auxiliaire (4) communique avec un collecteur d'alimentation (7) monté sur le corps de moteur (2);
une soupape anti-retour (11) qui est raccordée au tuyau d'alimentation (L4) et qui s'ouvre lorsque la pression de sortie de la partie de compresseur (4b) du turbocompresseur de turbine à gaz d'échappement auxiliaire (4) atteint ou dépasse la pression du collecteur d'alimentation (7);
un tuyau de dégazage (L9) ayant son extrémité raccordée au tuyau d'alimentation (L4) entre la partie de compresseur (4b) du turbocompresseur de turbine à gaz d'échappement auxiliaire (4) et la soupape anti-retour (11); et
une soupape de dégazage (12) raccordée au tuyau de dégazage (L9);
le procédé comprenant les étapes consistant à :
ouvrir la soupape de dégazage (12) à l'avance, ouvrir ensuite la soupape d'entrée de turbine (10) et fermer progressivement la soupape de dégazage (12) lors du démarrage du turbocompresseur de turbine à gaz d'échappement auxiliaire (4), dans lequel la soupape anti-retour (11) s'ouvre complètement lorsque la pression de sortie de la partie de compresseur (4b) du turbocompresseur de turbine à gaz d'échappement auxiliaire (4) atteint ou dépasse la pression du collecteur d'alimentation (7); et
ouvrir progressivement la soupape de dégazage (12) jusqu'à ce que la pression du collecteur d'alimentation (7) dépasse la pression de sortie de la partie de compresseur (4b) du turbocompresseur de turbine à gaz d'échappement auxiliaire (4), et fermer ensuite la soupape d'entrée de turbine (10) lors de l'arrêt du turbocompresseur de turbine à gaz d'échappement auxiliaire (4), dans lequel la soupape anti-retour (11) se ferme complètement lorsque la pression de sortie de la partie de compresseur (4b) du turbocompresseur de turbine à gaz d'échappement auxiliaire (4) devient une pression qui est inférieure à la pression du collecteur d'alimentation (7).
